# EUROPEAN PATENT APPLICATION

(11) **EP 4 474 151 A1**
(43) Date of publication of application: **11.12.2024**
(21) Application number: 22928367.6
(22) Date of filing: 02.12.2022
(51) Int. Cl.: B32B 27/30, B32B 27/18, B32B 27/06, C08L 25/06, C08K 3/30, C08K 3/32, C08L 83/04, B29C 48/18, G02B 5/02

(54) **QUANTUM-DOT DIFFUSION PLATE, AND PREPARATION METHOD THEREFOR AND APPLICATION THEREOF**

(30) Priority: 28.02.2022 CN 202210193205
(71) Applicant: KINGFA SCI. & TECH. CO., LTD., Guangzhou, Guangdong 510663 (CN)
(72) Inventor: GUAN, Huanxiang, Guangzhou, Guangdong 510663 (CN); HUANG, Baokui, Guangzhou, Guangdong 510663 (CN); CHEN, Pingxu, Guangzhou, Guangdong 510663 (CN); YE, Nanbiao, Guangzhou, Guangdong 510663 (CN); FU, Jinfeng, Guangzhou, Guangdong 510663 (CN); YANG, Xiaoyun, Guangzhou, Guangdong 510663 (CN)
(74) Representative: Petraz, Gilberto Luigi
(86) International application number: PCT/CN2022/136347
(87) International publication number: WO 2023/160107

(57) **Abstract**

The present disclosure belongs to the technical field of quantum-dot diffusion plate, and specifically relates to a quantum-dot diffusion plate, and preparation method and use thereof. The quantum-dot diffusion plate includes a diffusion layer, a quantum-dot layer and a transparent layer, and the quantum-dot layer is disposed between the diffusion layer and the transparent layer. On one hand, in the design where the diffusion layer and the transparent layer are at the bottom and the top, luminous efficiency of the diffusion plate can be guaranteed while inactivation of quantum dots can be avoided from external factors during use and storage, and the brightness retention rate can be enhanced, for the quantum dots are protected between the bottom layer and the top layer; on the other hand, the base materials of the top, middle and bottom layers in the present invention are the same, so that the linear expansion coefficients of the respective layers are consistent, thereby effectively avoiding the anamorphose resulted by dimensional discrepancy between layers due to the variation in ambient temperature during use and storage.

## Description

### TECHNICAL FIELD

The present invention belongs to the technical field of quantum-dot diffusion plate, and more specifically, relates to a quantum-dot diffusion plate, and a preparation method therefor and use thereof.

### BACKGROUND

Quantum dot is a nano-sized semiconductor bounding an exciton in three dimensional directions. By applying a certain electric field or light pressure to this nano-sized semiconductor material, the quantum dots emit light in a certain frequency, and frequency of the emitted light varies with the size of the semiconductor. Thus, color of the emitted light can be controlled by adjusting the size of the nano-sized semiconductor. Due to its properties of restricting electrons and electron holes, such nano-sized semiconductor is similar to the atom or molecule in the natural world, and therefore called quantum dot. In addition to controlling the emission spectrum by varying the size, the quantum dots have properties such as good photostability, long lifetime, wide excitation and narrow emission, and relatively large Stokes shift. Thus, the display has a more extensive color gamut and the color shown is closer to the intrinsic color of the object when applying the quantum dot technology to the field of display screen; the emitted light is closer to the sunlight when applying the quantum dot technology to the illumination industry.

In the existing technologies, the quantum dots are bonded with the photodiffusion plate to prepare a quantum-dot diffusion plate which generally used in the display industry. However, due to the sensitivity to heat, oxygen and water, the quantum dots are usually bonded with the photodiffusion plate in the following manners: ① boding the quantum dots with an ordinary diffusion plate by adhesive; ② coating a quantum-dot film when extruding a diffusion plate; ③ printing the quantum dots onto a diffusion plate by a printing method. Particularly, the water-proof oxygen-isolating quantum-dot films are mainly imported from abroad with high cost and complicated technics, and anamorphose would be resulted in the large-sized display apparatus due to the discrepancy in linear expansion coefficients between the quantum-dot film and the diffusion plate. The printing method is not conducive to process production due to its high cost and complicated technics which involve with a series of post treatments such as packaging. A Chinese patent publication discloses a quantum-dot diffusion plate, where other additives except the quantum dots are prepared into masterbatch, and then mixed evenly with the quantum dots by a mixing apparatus to extrude a plate. Although such method is simple, ligands or protective layer on the surface of the quantum dot may be inevitably damaged during the mechanical mixing, so that the quantum dots come into contact with oxygen and water in the air, leading to inactivation of the quantum dots and affecting the luminous efficiency and stability. Besides, the quantum dots in the quantum-dot diffusion plate prepared by this method distribute in the base material, oxygen and water may inevitably corrode those quantum dots at the surface during use, and therefore it is prone to inactivate the quantum dots at the surface and lead to brightness decay.

### SUMMARY

The technical problem to be solved by the present application is to provide a quantum-dot diffusion plate prepared by a simple method with low cost which has good luminous efficiency and emits light stably, so as to overcome the defects and deficiencies in the current quantum-dot diffusion plate which is prepared through complicated process with high cost, and prone to cause the quantum dots to contact with oxygen and water in the air, leading to inactivation of the quantum dots.

An objective of the present application is to provide a preparation method for the quantum-dot diffusion plate.

Another objective of the present application is to provide use of the quantum-dot diffusion plate.

The above objectives are achieved by the following solutions:
A quantum-dot diffusion plate, includes a diffusion layer, a quantum-dot layer and a transparent layer, the quantum-dot layer is disposed between the diffusion layer and the transparent layer;
wherein the quantum-dot layer includes the following components in parts by weight:
   100 parts of a base material, 1 - 2 parts of a lubricant, 0.3 - 3 parts of an antioxidant,0.3 - 3 parts of a weather-resistant agent, and 0.05 - 3 parts of quantum dots.

The quantum-dot diffusion plate of the present invention is prepared by a three-layer co-extrusion technology, having a sandwich structure with the quantum-dot layer in the middle, the diffusion layer and the transparent layer at the bottom and the top, respectively. Particularly, the transparent layer may further possess a frosted effect after roll-compression. In the design where the diffusion layer and the transparent layer are at the bottom and the top, luminous efficiency of the diffusion plate can be guaranteed while inactivation of quantum dots can be avoided from external factors during use and storage, and the brightness retention rate can be enhanced, for the quantum dots are protected between the bottom layer and the top layer.

Preferably, the quantum-dot layer has a thickness controlled in a range of 0.1 - 0.5 mm; the diffusion layer and the transparent layer have a respective thickness being greater than or equal to 0.3 mm.

Further, the quantum dots are made of an alloy material including two or more of Cd, Zn, Se, S, In and P.

Preferably, the quantum dots are selected from one or more of CdZnSeS, CdZnSe and CdZnS.

More preferably, the quantum dots are added as a quantum-dot suspension prepared from the quantum dots and an organic solvent, the organic solvent is selected from one or more of styrene, toluene, xylene, cyclohexane, n-hexane, ethanol, methanol, isopropanol, acetone, ethyl acetate, anisole, and tetrahydrofuran. In the present invention, the quantum dots are dissolved in the hydrophobic organic solvent, and the obtained quantum-dot suspension is added accurately to a mixture of quantum-dot layer to ensure a uniform distribution of quantum dots in the diffusion plate, simultaneously to avoid the inactivation of quantum dots from contacting with water and oxygen during processing by reducing such contact, and to improve the stability. Preferably, the organic solvent is selected from one or more of nonpolar organic solvents such as styrene, toluene, cyclohexane, and n-hexane. More preferably, the organic solvent is styrene or n-hexane.

Preferably, the quantum-dot suspension has a quantum-dot concentration of 5 - 20 wt%; more preferably, 10 - 20 wt%.

Further, the diffusion layer includes the following components in parts by weight:
100 parts of a base material, 5-15 parts of photodiffusion masterbatch, 1-2 parts of a lubricant, 0.3 - 3 parts of an antioxidant, and 0.3 - 3 parts of a weather-resistant agent.

Further, the photodiffusion masterbatch includes the following components in parts by weight:
88 - 93 parts of a base material, 6-10 parts of a photodiffusion agent, 0.5 - 1 part of an antioxidant, and 0.5 - 1 part of a lubricant.

Preferably, after mixing the components of the photodiffusion masterbatch, the photodiffusion masterbatch is extruded at 160 - 200°C and palletized.

Particularly, the photodiffusion agent is one or more of acrylate photodiffusion agents and organosilicon photodiffusion agents. Preferably, the photodiffusion agent is selected from organosilicon photodiffusion agents, such as one or more of methyl silicone resin microsphere diffusion agents, phenyl silicone resin microsphere diffusion agents and methyl phenyl silicone resin photodiffusion agents.

Further, the transparent layer includes the following components in parts by weight:
100 parts of a base material, 1 - 2 parts of a lubricant, 0.3 - 3 parts of an antioxidant, and 0.3 - 3 parts of a weather-resistant agent.

Further, the base material is selected from one or more of polypropylene (PP), cyclo-olefin polymer (COP), cyclo-olefin copolymer (COC), polystyrene (general purpose polystyrene, GPPS), poly(methyl methacrylate) (PMMA), styrene acrylonitrile copolymer (AS), styrene maleic anhydride copolymer (SMA), and copolyesters [poly(1,4-cyclohexanedimethylene terephthalate-co-ethylene terephthalate) (PETG), poly(1,4-cyclohexylene dimethylene terephthalate)glycol (PCTG)]. The material is preferably a material capable of being extruded below 200°C.

Preferably, the base materials of the diffusion layer, the quantum-dot layer and the transparent layer in the present invention are the same, so that the linear expansion coefficients of the respective layers are the same, thereby effectively avoiding the anamorphose resulted by dimensional discrepancy between layers due to the variation in ambient temperature during use and storage.

More preferably, the base material is GPPS, preferably having a melt index of 2 - 5 g/10 min (200°C /5 kg) and a content of residual monomers less than 0.05%.

Further, the weather-resistant agent is selected from one or more of hindered amine photostabilizers, benzotriazoles, benzophenones, triazines, and salicylates weathering agents.

Further, the antioxidant is selected from one or more of hindered phenols, phosphites, metal alkyl thiophosphates, carbamic acid, and organic sulfur antioxidants. Preferably, the antioxidant is a phosphate antioxidant.

Further, the lubricant is selected from one or more of ethylene bis stearamide, polysiloxane, stearate, PE wax, PP wax, and N,N'-ethylenebis(stearamide).

In addition, the present invention further provides a preparation method for the quantum-dot diffusion plate, including the following steps:
step S1, preparation of a mixture for diffusion layer: mixing a base material, a photodiffusion masterbatch, a lubricant, an antioxidant and a weather-resistant agent evenly to obtain the mixture for diffusion layer;
step S2, preparation of a mixture for quantum-dot layer: mixing a base material, a lubricant, an antioxidant and a weather-resistant agent evenly to obtain the mixture for quantum-dot layer;
step S3, preparation of a mixture for transparent layer: mixing a base material, a lubricant, an antioxidant and a weather-resistant agent evenly to obtain the mixture for transparent layer; and
step S4, preparation of the quantum-dot diffusion plate: preparing a quantum-dot suspension from quantum dots and an organic solvent, adding the quantum-dot suspension to the mixture for quantum-dot layer obtained in step S2 through a metering system and mixing evenly, then performing three-layer co-extrusion by extruding the mixture for quantum-dot layer simultaneously with the mixture for diffusion layer obtained in step S1 and the mixture for transparent layer obtained in step S3, followed by processing to obtain the quantum-dot diffusion plate.

Further, the mixing in steps S1 to S3 is performed at 100 - 800 rpm, and lasts for 1 - 5 min, respectively.

Further, in step S4, extruders for extruding the mixture for diffusion layer and the mixture for transparent layer are single-screw extruders, temperature of the section I is 80°C - 100°C, and temperature of the other sections is set at 170°C - 200°C, with a screw speed of 10 - 200 rpm. An extruder for extruding the mixture for quantum-dot layer is a single-screw extruder with a combined screw, where the metering section has 2 or more sets of DIS elements of which a feeding chute is 6 or more, and the metering section is provided at the front end with a water-proof and oxygen-proof liquid metering pump; temperature of the section I is 80°C - 100°C, and temperature of the other sections is set at 160°C - 180°C, with a screw speed of 10 - 100 rpm.

Further, a die temperature of the three-layer co-extrusion is 170°C - 190°C.

In addition, the present invention also provides use of the quantum-dot diffusion plate in the field of display screen and illumination.

The present invention has the following beneficial effects:
The quantum-dot diffusion plate of the present invention includes a quantum-dot layer, a diffusion layer and a transparent layer, where the quantum-dot layer is disposed between the diffusion layer and the transparent layer. On one hand, in the design where the diffusion layer and the transparent layer are at the bottom and the top, luminous efficiency of the diffusion plate can be guaranteed while inactivation of quantum dots can be avoided from external factors during use and storage, and the brightness retention rate can be enhanced, for the quantum dots are protected between the bottom layer and the top layer; on the other hand, the base materials of the top, middle and bottom layers in the present invention are the same, so that the linear expansion coefficients of the respective layers are consistent, thereby effectively avoiding the anamorphose resulted by dimensional discrepancy between layers due to the variation in ambient temperature during use and storage.

### DETAILED DESCRIPTION OF EMBODIMENTS

The present invention is further illustrated with the following specific examples, but not limited by thereto in any way. Unless otherwise specified, the reagents, methods, and equipment used in the present invention are conventional reagents, methods, and equipment in the field.

Polystyrene (GPPS), model: GP1050, purchased from Total.

Quantum-dot suspension 1: QD-530 (composed of CdZnSeS, purchased from Poly OptoElectronics Co. Ltd) was added to polystyrene to prepare the quantum-dot suspension 1 with 20wt% of quantum dots.

Quantum-dot suspension 2: QD-530 (composed of CdZnSeS, purchased from Poly OptoElectronics Co. Ltd) was added to n-hexane to prepare the quantum-dot suspension 2 with 20wt% of quantum dots.

Quantum-dot suspension 3: QD-530 (composed of CdZnSeS, purchased from Poly OptoElectronics Co. Ltd) was added to isopropanol to prepare the quantum-dot suspension 3 with 20wt% of quantum dots.

Quantum-dot suspension 4: QD-530 (composed of CdZnSeS, purchased from Poly OptoElectronics Co. Ltd) was added to ethyl acetate to prepare the quantum-dot suspension 4 with 20wt% of quantum dots.

Quantum-dot suspension 5: Mesolight XSQD (composed of InZnP, purchased from Jiangsu Mesolight Nanotechnology Co. Ltd.) was added to toluene to prepare the quantum-dot suspension 5 with 20wt% of quantum dots.

Photodiffusion masterbatch (LSPS-MB): 90 parts of polystyrene, 8 parts of a photodiffusion agent (organosilicon photodiffusion agent), 1 part of an antioxidant, and 1 part of a lubricant were mixed evenly, then added to a twin-screw extruder, extruded at 160°C - 200°C and palletized to obtain the photodiffusion masterbatch.

It should be illustrated that weather-resistant agents, antioxidants and lubricants in respective examples, comparative examples and the photodiffusion masterbatch are the same.

Unless specified, agents and materials used in the following examples are commercially available.

### Examples 1 - 9 Quantum-dot diffusion plates

Compositions and proportions of the quantum-dot diffusion plates are shown in Table 1.

**Table 1 Formula (parts by weight) of the quantum-dot diffusion plates in the examples**

| Group | Extrude r | GPPS GP105 0 | LSPS-M B | Quantum-d ot suspension | Weather-resista nt agent | Antioxidan t | Lubrican t |
|---|---|---|---|---|---|---|---|
| Example s 1 -9 | 1# | 100 | 10 | / | 1 | 1 | 1 |
| | 3# | 100 | / | / | 1 | 1 | 1 |
| Example 1 | 2# | 100 | / | 10 | 1 | 1 | 1 |
| Example 2 | 2# | 100 | / | 10 | 1 | 1 | 1 |
| Example 3 | 2# | 100 | / | 10 | 1 | 1 | 1 |
| Example 4 | 2# | 100 | / | 10 | 1 | 1 | 1 |
| Example 5 | 2# | 100 | / | 10 | 1 | 1 | 1 |
| Example 6 | 2# | 100 | / | 1 | 1 | 1 | 1 |
| Example 7 | 2# | 100 | / | 15 | 1 | 1 | 1 |
| Example 8 | 2# | 100 | / | 10 | 2 | 2 | 2 |
| Example 9 | 2# | 100 | / | 10 | 1 | 1 | 1 |

Preparation of the quantum-dot diffusion plates of Examples 1 - 8 includes the following steps:
step S1, preparation of a mixture for diffusion layer: the polystyrene base material (GPPS), photodiffusion masterbatch, lubricant [N,N'-ethylenebis(stearamide)], antioxidant [bis(2,6-di-ter-butyl-4-methylphenyl)pentaerythritol-diphosphite) and penaerythritol-tetrakis-3-(3, 5-di-*tert*-butyl-4-hydroxyphenyl) propionate in a mass ratio of 1:2], and weather-resistance agent [bis(2,2,6,6-tetramethyl-4-piperidyl)sebacate and 2-(2'-hydroxy-5'-*tert*-octyllphenyl)benzotriazole in a mass ratio of 1:1] were mixed evenly in a high-speed mixer, and fed to a storage hopper of the 1# extruder for later use;
step S2, preparation of a mixture for quantum-dot layer (the middle layer): the polystyrene base material (GPPS), lubricant [N,N'-ethylenebis(stearamide)], antioxidant [bis(2,6-di-ter-butyl-4-methylphenyl)pentaerythritol-diphosphite) and penaerythritol-tetrakis-3-(3, 5-di-*tert*-butyl-4-hydroxyphenyl) propionate in a mass ratio of 1:2], and weather-resistance agent [bis(2,2,6,6-tetramethyl-4-piperidyl)sebacate and 2-(2'-hydroxy-5'-*tert*-octyllphenyl)benzotriazole in a mass ratio of 1:1] were mixed evenly in a high-speed mixer, and fed to a storage hopper of the 2# extruder for later use;
step S3, preparation of a mixture for transparent layer: the polystyrene base material (GPPS), lubricant [N,N'-ethylenebis(stearamide)], antioxidant [bis(2,6-di-ter-butyl-4-methylphenyl)pentaerythritol-diphosphite) and penaerythritol-tetrakis-3-(3, 5-di-*tert*-butyl-4-hydroxyphenyl) propionate in a mass ratio of 1:2], and weather-resistance agent [bis(2,2,6,6-tetramethyl-4-piperidyl)sebacate and 2-(2'-hydroxy-5'-*tert*-octyllphenyl)benzotriazole in a mass ratio of 1:1] were mixed evenly in a high-speed mixer, and fed to a storage hopper of the 3# extruder for later use; and
step S4, preparation of the quantum-dot diffusion plate: the 2# extruder for the middle layer was turned on first, after the mixture to be melt came out of the die, the water-proof and oxygen-proof liquid metering pump containing the quantum-dot suspension disposed on the 2# extruder was turned on, so that the quantum-dot suspension was added to the 2# extruder and mixed evenly, then the 1# extruder and the 3# extruder were turned on to perform three-layer co-extrusion, followed by cooling and cutting, the quantum-dot diffusion plate was obtained.

Particularly, the mixing in steps S1 to S3 was performed at 100 - 800 rpm, and lasted for 1 - 5 min, respectively.

In step S4, the 1# extruder and the 3# extruder are single-screw extruders, temperature of the section I was 80°C - 100°C, and temperature of the other sections was set at 170°C - 200°C, with a screw speed of 10 - 200 rpm. The 2# extruder (the quantum-dot layer) is a single-screw extruder with a combined screw, where the metering section has 2 or more sets of DIS elements of which a feeding chute is 6 or more, and the metering section is provided at the front end with the water-proof and oxygen-proof liquid metering pump; temperature of the section I was 80°C - 100°C, and temperature of the other sections was set at 160°C - 180°C, with a screw speed of 10 - 100 rpm.

The quantum-dot diffusion plates prepared have a quantum-dot layer thickness controlled to 0.1 mm - 0.5 mm approximately.

Particularly, Examples 2, 3, 4, and 5 are different from Example 1 in that, the quantum-dot suspension 1 of Example 1 was replaced by the quantum-dot suspension 2, the quantum-dot suspension 3, the quantum-dot suspension 4, and the quantum-dot suspension 5 in Examples 2, 3, 4, and 5, respectively. Example 6 is different from Example 1 in that, the additive amount of quantum-dot suspension 1 was reduced from 10 parts to 1 part; Example 7 is different from Example 1 in that, the additive amount of quantum-dot suspension 1 was increased from 10 parts to 15 parts; Example 8 is different from Example 1 in that, the additive amounts of antioxidant, weather-resistant agent and lubricant were double; Example 9 is different from Example 1 in that, the quantum-dot suspension of Example 1 was directly mixed evenly with the mixture for quantum-dot layer in Example 9, and other parameters and process method remained the same as those in Example 1; and finally quantum-dot diffusion plates having a three-layer structure (**diffusion layer-quantum-dot layer-transparent layer**) were obtained. Referring to Example 1 for other parameters and preparation method.

### Comparative Examples 1-10 Quantum-dot diffusion plates

Additive amounts in the quantum-dot diffusion plates in the comparative examples are shown in Table 2.

**Table 2 Formula (parts by weight) of the quantum-dot diffusion plates in the comparative examples**

| Group | Extrud er | GPPS GP105 0 | LSPS-M B | Quantum-d ot suspension 1/powder | Weather-resista nt agent | Antioxida nt | Lubrica nt |
|---|---|---|---|---|---|---|---|
| Comparati ve Example 1 | 1# | 100 | 5 | / | 1 | 1 | 1 |
| | 2# | 100 | / | 10 | 1 | 1 | 1 |
| | 3# | 100 | 5 | / | 1 | 1 | 1 |
| Comparati ve Example 2 | 1# | 100 | / | / | 1 | 1 | 1 |
| | 2# | 100 | 10 | 10 | 1 | 1 | 1 |
| | 3# | 100 | / | / | 1 | 1 | 1 |
| Comparati ve Example 3 | 1# | 100 | / | 10 | 1 | 1 | 1 |
| | 2# | 100 | 10 | / | 1 | 1 | 1 |
| | 3# | 100 | / | / | 1 | 1 | 1 |
| Comparati ve Example 4 | 1# | 100 | / | 10 | 1 | 1 | 1 |
| | 2# | 200 | 10 | / | 1 | 1 | 1 |
| | 3# | / | / | / | / | / | / |
| Comparati ve Example 5 | 1# | 300 | 10 | 10 | 1 | 1 | 1 |
| | 2# | / | / | / | / | / | / |
| | 3# | / | / | / | / | / | / |
| Comparati ve Example 6 | 1# | / | / | / | / | / | / |
| | 2# | 300 | 10 | 10 | 1 | 1 | 1 |
| | 3# | / | / | / | / | / | / |
| Comparati ve Example 7 | 1# | 100 | 10 | / | 1 | 1 | 1 |
| | 2# | 100 | / | 2 | 1 | 1 | 1 |
| | 3# | 100 | / | / | 1 | 1 | 1 |
| Comparati ve Example 8 | 1# | 100 | 10 | / | 1 | 1 | 1 |
| | 2# | 100 | / | 2 | 1 | 1 | 1 |
| | 3# | 100 | / | / | 1 | 1 | 1 |
| Comparati ve Example 9 | 1# | 100 | 10 | / | 1 | 1 | 1 |
| | 2# | 100 | / | 0.2 | 1 | 1 | 1 |
| | 3# | 100 | / | / | 1 | 1 | 1 |
| Comparati ve Example 10 | 1# | 100 | 10 | / | 1 | 1 | 1 |
| | 2# | 100 | / | 25 | 1 | 1 | 1 |
| | 3# | 100 | / | / | 1 | 1 | 1 |

Comparative Example 1 is different from Example 1 in that: the photodiffusion masterbatch of Example 1 added to the 1# extruder was divided into two equal parts in Comparative Example 1, and these two parts were added to the 1# extruder and the 3# extruder, respectively, according to the corresponding ratios. Other parameters and process method remained the same as those in Example 1; and finally a quantum-dot diffusion plate having a three-layer structure (**diffusion layer-quantum-dot layer-diffusion layer**) was obtained.

Comparative Example 2 is different from Example 1 in that: the photodiffusion masterbatch of Example 1 added to the 1# extruder was added to the 2# extruder for the middle layer in Comparative Example 2, and other parameters and process method remained the same as those in Example 1, and finally a quantum-dot diffusion plate having a three-layer structure (**transparent layer-quantum-dot diffusion layer-transparent layer**) was obtained.

Comparative Example 3 is different from Example 1 in that the extruders for the mixture of diffusion layer, mixture of quantum-dot layer and mixture of transparent layer in Example 1 were exchanged to the following in Comparative Example 3: the mixture of quantum-dot layer was extruded by the 1# extruder (the quantum-dot suspension was added through the water-proof and oxygen-proof liquid metering pump), the mixture of diffusion layer was extruded by the 2# extruder and the mixture of transparent layer was extruded by the 3# extruder; and finally a quantum-dot diffusion plate having a three-layer structure (**quantum-dot layer-diffusion layer-transparent layer**) was obtained.

Comparative Example 4 is different from Example 1 in that the mixture of quantum-dot layer was extruded by the 1# extruder (the quantum-dot suspension was added through the water-proof and oxygen-proof liquid metering pump) and the mixture of diffusion layer was extruded by the 2# extruder in Comparative Example 4, and finally a quantum-dot diffusion plate having a **two-layer structure** (**quantum-dot layer-diffusion layer**) was obtained.

Comparative Example 5 is different from Example 1 in that the mixture of diffusion layer, mixture of quantum-dot layer, mixture of transparent layer and the quantum-dot suspension of Example 1 were mixed evenly and added directly to the 1# extruder in Comparative Example 5, and only one extruder was used for extruding; and finally a quantum-dot diffusion plate having a **quantum-dot diffusion mono-layer structure** was obtained.

Comparative Example 6 is different from Example 1 in that the mixture of diffusion layer, mixture of quantum-dot layer, mixture of transparent layer of Example 1 were mixed evenly and added directly to the 2# extruder in Comparative Example 6, the quantum-dot suspension was added to the 2# extruder through the water-proof and oxygen-proof liquid metering pump, and only the 2# extruder was used for extruding; and finally a quantum-dot diffusion plate having a **quantum-dot diffusion mono-layer structure** was obtained.

Comparative Example 7 is different from Example 1 in that the quantum-dot suspension 1 of Example 1 was replaced by the same amount of quantum-dot powder QD-530 in Comparative Example 7, the powder was added to the 2# extruder through the position of the metering pump by way of side-feeding, other parameters and process method remained the same as those in Example 1; and finally a quantum-dot diffusion plate having a three-layer structure (**diffusion layer-quantum-dot layer-transparent layer**) was obtained.

Comparative Example 8 is different from Comparative Example 7 in that the quantum-dot powder QD-530 of Comparative Example 7 was added by the same amount to the 2# extruder through a main feeding port by way of main-feeding in Comparative Example 8, other parameters and process method remained the same as those in Example 1; and finally a quantum-dot diffusion plate having a three-layer structure (**diffusion layer-quantum-dot layer-transparent layer**) was obtained.

Comparative Examples 9-10 are different from Example 1 in that the additive amount of quantum-dot suspension of Example 1 was changed to 0.2 part or 25 parts, respectively in Comparative Example 9 and Comparative Example 10, other parameters and process method remained the same as those in Example 1; and finally quantum-dot diffusion plates having a three-layer structure (**diffusion layer-quantum-dot layer-transparent layer**) were obtained.

### Experimental Example Performance Test

High-temperature brightness decay and high-temperature high-humidity brightness decay of the examples and comparative examples were determined according to the following methods:
High-temperature storage stability test: after placing in an air drying oven at constant temperature of 85°C for 500 h, the quantum-dot diffusion plate was placed under a blue-ray LED module, and central point brightness of the diffusion plate before and after the test was determined by a LS-100 handheld photometer from Konica Minolta (constant electric current of 65 mA and constant voltage of 6.5 V), and brightness retention rate was calculated;
High-temperature high-humidity storage stability test: after placing in a condition of 60°C and 90% RH for 500 h, brightness of the diffusion plate before and after the test was determined, and brightness retention rate was calculated

Test results are shown in Table 3.

**Table 3 High-temperature brightness retention rate and High-temperature high-humidity brightness retention rate of the quantum-dot diffusion plates (%)**

| Group | High-temperature brightness retention rate (85°C) | High-temperature high-humidity brightness retention rate (60°C, 90% RH) |
|---|---|---|
| Example 1 | 97.3 | 96.6 |
| Example 2 | 96.2 | 95.7 |
| Example 3 | 93.3 | 91.5 |
| Example 4 | 94.9 | 93.1 |
| Example 5 | 93.2 | 91.6 |
| Example 6 | 97.5 | 97.1 |
| Example 7 | 96.6 | 96.1 |
| Example 8 | 98.2 | 96.6 |
| Example 9 | 90.3 | 86.9 |
| Comparative Example 1 | 82.1 | 76.3 |
| Comparative Example 2 | 84.3 | 78.6 |
| Comparative Example 3 | 75.3 | 70.5 |
| Comparative Example 4 | 74.3 | 67.1 |
| Comparative Example 5 | 69.3 | 61.0 |
| Comparative Example 6 | 65.3 | 54.1 |
| Comparative Example 7 | 85.3 | 76.6 |
| Comparative Example 8 | 87.1 | 79.4 |
| Comparative Example 9 | 75.1 | 58.7 |
| Comparative Example 10 | 88.7 | 69.5 |

It can be seen from the table that the quantum-dot diffusion plates prepared by the present invention have brightness retention rates above 85% in the condition of high temperature and in the condition of high temperature and high humidity, with a better stability. Particularly, in Examples 1-2, polystyrene and n-hexane were used as solvents in preparing the quantum-dot suspensions, and the quantum-dot diffusion plates prepared thereby have better brightness retention rates. Compared with Example 1, the diffusion plate of Example 9 has the same structure, the form of quantum dots are the same, but the quantum dots were mixed mechanically with other components before adding to the extruder due to the way of main feeding. Ligands on the quantum dot surface may be damaged more by the acting force during the mechanical mixing, leading to reduced brightness retention rate in the condition of high temperature and high humidity.

Compared with Example 1, the three-layer structure of the diffusion plates in Comparative Examples 1 - 6 were changed, and brightness retention rates thereof were apparently decreased.

Compared with Example 1, although the diffusion plates in Comparative Examples 7 - 8 have the same structure, the way of adding and form of quantum dots are different where the quantum dots were not prepared into suspension for directly adding, the brightness retention rates of the diffusion plates dropped obviously. Particularly, the quantum-dot powder was required to be mixed mechanically with the resin particles during main feeding, which easily led to damage to the ligands on the quantum dot surface and reduced the luminous efficiency of quantum dots. Besides, the quantum dots underwent compression and melting with the resin during main feeding which also easily led to damage to the ligands on the quantum dot surface and reduced the luminous efficiency of quantum dots. By side feeding, the quantum dots did not undergo mechanical mixing with the resin particles or compression and melting, and thus damage to the ligands of quantum dot was reduced. It illustrates that without the protection of organic solvent, the quantum dots were added directly by side feeding (reducing the exogenic action) with mechanical mixing, the luminous efficiency and brightness retention rate in the condition of high temperature and high humidity would be affected.

Compared with Example 1, the additive amounts of quantum-dot suspension were varied in Comparative Examples 9 and 10, the brightness retention rate in the condition of high temperature and high humidity would be decreased if the content of quantum dots in unit volume was too high or too low.

The above examples are preferred embodiments of the present invention, but implementations of the present invention are not limited thereby. Any other changes, modifications, substitutions, combinations, or simplifications made without departing from the spirit and principles of the present invention should be equivalent substitution methods and are included in the scope of protection of the present invention.

## Claims

1. A quantum-dot diffusion plate, **characterized in that**, the plate comprises a diffusion layer, a quantum-dot layer and a transparent layer, the quantum-dot layer is disposed between the diffusion layer and the transparent layer;
wherein the quantum-dot layer comprises the following components in parts by weight:
100 parts of a base material,
1 - 2 parts of a lubricant,
0.3 - 3 parts of an antioxidant,
0.3 - 3 parts of a weather-resistant agent, and
0.05 - 3 parts of quantum dots.

2. The quantum-dot diffusion plate according to claim 1, **characterized in that**, the quantum dots are made of an alloy material comprising two or more of Cd, Zn, Se, S, In and P.

3. The quantum-dot diffusion plate according to claim 2, **characterized in that**, the quantum dots are selected from one or more of CdZnSeS, CdZnSe and CdZnS.

4. The quantum-dot diffusion plate according to claim 1, **characterized in that**, the quantum dots are added as a quantum-dot suspension prepared from the quantum dots and an organic solvent, the organic solvent is selected from one or more of styrene, toluene, xylene, cyclohexane, n-hexane, ethanol, methanol, isopropanol, acetone, ethyl acetate, anisole, and tetrahydrofuran.

5. The quantum-dot diffusion plate according to claim 1, **characterized in that**, the diffusion layer comprises the following components in parts by weight:
100 parts of a base material,
5 - 15 parts of photodiffusion masterbatch,
1-2 parts of a lubricant,
0.3 - 3 parts of an antioxidant, and
0.3 - 3 parts of a weather-resistant agent.

6. The quantum-dot diffusion plate according to claim 5, **characterized in that**, the photodiffusion masterbatch comprises the following components in parts by weight:
88 - 93 parts of a base material,
6 - 10 parts of a photodiffusion agent,
0.5 - 1 part of an antioxidant, and
0.5 - 1 part of a lubricant.

7. The quantum-dot diffusion plate according to claim 1, **characterized in that**, the transparent layer comprises the following components in parts by weight:
100 parts of a base material,
1 - 2 parts of a lubricant,
0.3 - 3 parts of an antioxidant, and
0.3 - 3 parts of a weather-resistant agent.

8. The quantum-dot diffusion plate according to any one of claims 1 and 5 to 7, **characterized in that**, the base material is selected from one or more of PP, COC, COP, GPPS, PMMA, AS, SMA, PETG, and PCTG.

9. A preparation method for the quantum-dot diffusion plate according to any one of claims 1 to 8, **characterized in that**, the method comprises the following steps:
step S1, preparation of a mixture for diffusion layer: mixing a base material, a photodiffusion masterbatch, a lubricant, an antioxidant and a weather-resistant agent evenly to obtain the mixture for diffusion layer;
step S2, preparation of a mixture for quantum-dot layer: mixing a base material, a lubricant, an antioxidant and a weather-resistant agent evenly to obtain the mixture for quantum-dot layer;
step S3, preparation of a mixture for transparent layer: mixing a base material, a lubricant, an antioxidant and a weather-resistant agent evenly to obtain the mixture for transparent layer; and
step S4, preparation of the quantum-dot diffusion plate: preparing a quantum-dot suspension from quantum dots and an organic solvent, adding the quantum-dot suspension to the mixture for quantum-dot layer obtained in step S2 through a metering system and mixing evenly, then performing three-layer co-extrusion by extruding the mixture for quantum-dot layer simultaneously with the mixture for diffusion layer obtained in step S1 and the mixture for transparent layer obtained in step S3, followed by processing to obtain the quantum-dot diffusion plate.

10. Use of the quantum-dot diffusion plate according to any one of claims 1 to 8 in the field of display screen and illumination.
